# EUROPEAN PATENT SPECIFICATION

(11) **EP 3 352 993 B1**
(45) Date of publication and mention of the grant of the patent: **29.01.2020**
(21) Application number: 16767283.1
(22) Date of filing: 20.09.2016
(51) Int. Cl.: B42D 25/305, G06Q 10/10, B42D 25/24, G06K 9/00, G06T 1/00, G06T 11/60, H04N 1/32, G06Q 50/26

(54) **REMOTE PASSPORT AND SECURITY DOCUMENT MARKING**
ENTFERNTE MARKIERUNG VON PÄSSEN UND SICHERHEITSDOKUMENTEN
MARQUAGE DE DOCUMENTS DE SÉCURITÉ ET DE PASSEPORT À DISTANCE

(30) Priority: 24.09.2015 EP 15186661
(43) Date of publication of application: 01.08.2018
(73) Proprietor: Sicpa Holding SA, 1008 Prilly (CH)
(72) Inventor: TALWERDI, Mehdi, North Vancouver, British Columbia V7 2G3 (CA)
(74) Representative: Carvajal y Urquijo, Isabel
(86) International application number: PCT/EP2016/072259
(87) International publication number: WO 2017/050739

(56) References cited:
- WO-A1-2013/067092
- US-A1- 2015 143 535
- US-B1- 7 958 147

## Description

### Technical Field

The present invention relates to systems, entities, and methods for remote passport and security documents marking. More specifically, the present invention relates to marking of passports as an exemplary security document with corresponding stamps, labels, visa, and the like.

### Background

It is common in most countries that individuals are checked at border checkpoints when entering or exiting the country. Various rules and laws regulate whether individuals are permitted entry or whether entry (or exit) is denied. A common means is the issuance of visas that the individual grant access to a country for a given limited period (e.g. 30 or 90 days, etc.) or with no limitations. Usually, the individual presents his/her passport at the border checkpoint when entering the country and an official checks the visa status. If entry can be permitted, a physical stamp or label is applied to the passport that indicates entry (possibly in conjunction with an entry location and date) or represents the visa itself. Upon leaving the country a further mark is applied to the passport, so that the passport can be checked for determining whether an individual is permitted to stay in some country, whether a permissible time has expired, or whether a number of permissible (re)entries to a country is exhausted.

The drawback with stamps and labels, or in general a mark, applied to passports and other security documents is that the location and quality of the mark in the document may vary to a great extent. Specifically, a stamp (rubber stamp) may be applied with poor quality so that legibility of the mark is adversely affected or the mark interferes with already existing marks so that their respective legibility is affected. Furthermore, the position of corresponding marks (e.g. entry stamp and exit stamp) may not be well-defined so that officials have to browse the entire passport so as to look for an entry stamp and so as to look for a suitable location of an exit stamp. This takes time and the officer at the checkpoint is only able to process a limited number of individuals per given time. Furthermore, security documents such as passports, have only a limited space available for marks, so that inefficient use of the available space may require the issuance of a new passport before a further visa can be applied.

At the same time, electronic systems for issuing and authenticating security documents, such as passports, identity cards, visa, driving licences, and the like, are common practice in most countries all over the world today. Such systems usually comprise central data repositories that are connected by means of well protected, closed protocols and data links to the equipment and terminals in the field. The field equipment usually comprises data terminals, scanners, printers, and the like.

Usually, authorized personnel employ such systems at, for example, border checkpoints (immigration), authority office premises, airports, and mobile checkpoints as part of common police patrols. Specifically, authorized personnel may check a security document from an owner in the field by querying personal data taken from the security document by means of accessing the mentioned special central data repositories.

The system may provide an analysis result to a terminal in the field so that the personnel can take appropriate action, e.g. letting the checked person pass a security checkpoint, arresting the checked person, providing the checked person with a certificated, applying a stamp or mark to the presented security document. For example, an officer can query the system whether a presented passport and visa is genuine and correspondingly retrieve information whether or not a mark to the passport should be applied and the individual can pass the checkpoint and enter the country.

The publication US 7,314,162 discloses a method and system for reporting identity document usage by storing in a database and reporting to an identity document owner instances in which that person's driver's license, passport or other government-issued identification documents are presented as a form of ID, thereby facilitating early notification of identity theft.

Further, the publication US 7,503,488 discloses a method of assessing the risk of fraud before issuing a driver's license to an applicant on the basis of the relative incidence of fraud historically associated with the particular combination of collateral identification documents (e.g. birth certificate, passport, student ID card, etc.) presented by the applicant in their application for the driver's license.

It is therefore an object of the present invention to provide a system for remote passport and security document marking that makes efficient use of existing infrastructure, i.e. equipment in the field, central data processing and repositories, and networks connecting the same. It is specifically and object of the present invention to provide a solution to the problematic and unsatisfactory application of marks to passports and security documents.

Patent document WO 2013/067092 A1 discloses a system for remotely printing a value document such as a coupon or a voucher.

### Summary

The above mentioned problems and drawbacks of the conventional concepts are solved by the subject-matter of the independent claims. Further preferred embodiments are described in the dependent claims.

According to an embodiment of the present invention, a system is provided according to claim 1.

According to an embodiment of the present invention, a method is provided according to claim 12.

Generally, in the embodiments the network can be either wired or wireless or a combination thereof. Further, the data may be accompanied by data of voice, biometric, or biological analysis such as blood sample, DNA or observation profile, etc. The analytics module may be further adapted to match a data record against historical data in the repository or data about the data (metadata).

### Brief Description of the Drawings

Embodiments of the present invention, which are presented for better understanding the inventive concepts but which are not to be seen as limiting the invention, will now be described with reference to the Figures in which:
- Figure 1A: shows a schematic view of a conventional border checkpoint with electronic equipment for analyzing a security document;
- Figure 1B: shows a schematic view of a security document with marks for the example of a passport with visas, stamps, and labels;
- Figure 2: shows a schematic view of a deployment of a system for remote passport and security document marking according to an embodiment of the present invention;
- Figure 3: shows a schematic view of a server entity for remote security document marking according to a further embodiment of the present invention;
- Figure 4: shows a schematic view of a general apparatus embodiment of a server entity for remote security document marking; and
- Figure 5: shows a flowchart of a general method of operation embodiment of the present invention.

### Detailed Description

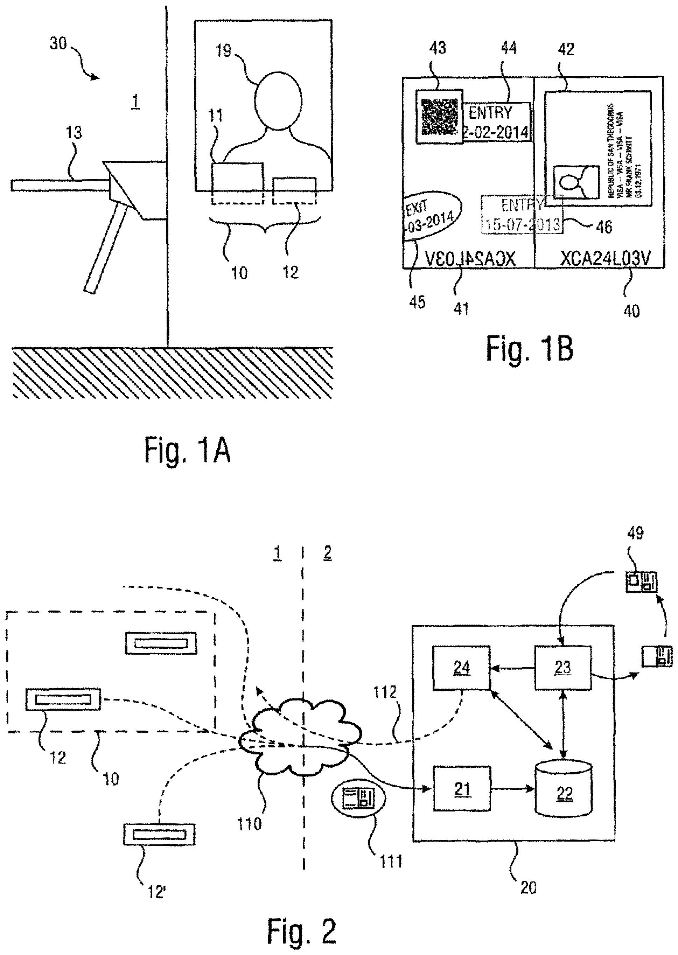

Figure 1A shows a schematic view of a conventional border checkpoint with electronic equipment for analyzing a security document. Specifically, there is shown a checkpoint 30 as part of security equipment in the field 1. Generally, the term field relates to all the locations where corresponding equipment and components are distributed. This field equipment, therefore, includes components such as input terminals, display terminals, scanners, printers, and the like. In the shown example, the checkpoint 30 allows a security officer 19 to operate, for example, a display terminal 11 and a scanner 12. In a usual scenario, an individual will present a security document to the officer 19. Accordingly, it is assumed that the individual is the owner of the security document and the correct ownership and/or the corresponding authenticity of the presented security document is analyzed and checked.

More specifically, the individual will present the security document to the officer 19, who, in turn may employ the scanner 12 for scanning the security document or parts thereof. Usually, the scanner 12 will employ data-processing techniques for extracting information concerning the individual (or the owner of the presented security document), such as a name, a date of birth, and/or a security document number either in biographic or biometric format such as RFID content, etc.. In general, any of the following data items may represent so-called additional data concerning the individual/owner/holder of the security document: surname, given name, date and place of birth, country of citizenship, place and country of residence, document number, document type identification, document issue date, document issue place, biometric data of the owner, image data or graphical data concerning the face, fingerprints, or other physical characteristics of the document owner, and the like.

Once the scanner 12 has generated such information concerning the individual, this information can be forwarded via a secure link to some kind of central repository (not shown). This repository is likely to be a server and or resources of a datacenter, private network and/or cloud infrastructure that are arranged and able to analyze the received information with regard to authentication. For example, the repository may store data concerning whether or not the individual has the right to enter a given country. Assuming that the shown checkpoint 30 is located before a departure gate or electronically connected securely (wired or wireless) to the airport, the repository may store data indicating whether or not the individual has rightfully entered the country and is now leaving the country within a permissible visa duration. For example, the repository may inform the officer 19 via the display terminal 11 that the individual who presented his/her passport at the checkpoint 30 has stayed longer in the country then permitted by his/her respective visa. The officer 19 may accordingly operate a barrier 13 so as to allow arresting of the individual. Naturally, the officer 19 may also operate the barrier 13 so as to let the individual pass if a response from the repository 120 indicates that everything is in order.

In general, the conventional electronic systems for security document analysis usually employ distributed equipment field 1 and some kind of central resources located at one or more central locations for data storage and analysis. The link may be implemented by a dedicated special signal line, or maybe some kind of secure communication over existing communication networks, such as the Internet (e.g. VPN connection, tunnels, etc.). These conventional systems suffer from the drawback that it is difficult to add or change the components of the field equipment 10.

Figure 1B shows a schematic view of a security document with marks for the example of a passport with visas, stamps, and labels. Specifically, there is shown an opened booklet of a passport as an example for a security document 40. The passport 40 may usually be provided with some kind of identification information such as a passport number 41. The Passport owner (individual) may have applied for a visa for a given country which was granted and accordingly applied to the passport 40 as some kind of visa label 42. This visa label may in turn comprise corresponding identification information and security features, such as photographs, holograms, and the like.

As shown, the passport 40 has further applied marks in the form of a label 43, and stamps 44, 45, and 46. As already mentioned, the application of stamps and labels may suffer from various drawbacks. In particular, a label 43 may be applied in the way so that it covers part of an earlier applied stamp 44. In this way, legibility of the stamp 44 may be severely affected. Similarly, a stamp 45 may be applied in an incorrect fashion so that only a part thereof appears on the passport 40. A further but not final example is stamp 46 that was applied with poor quality so that also legibility is severely affected. The latter may be the result of too little ink or application pressure employed when applying stamp 46 to passport 40. Moreover, stamp 46 is again applied in a fashion so that legibility of other passport marks may be severely affected.

Figure 2 shows a schematic view of a deployment of a system for remote passport and security document marking according to an embodiment of the present invention. A corresponding system 20 is provided at some kind of central location 2 in the sense that it can be remote from the various sites in the field 1, where the equipment for scanning, printing, data input/output etc. is distributed. Generally, the system 20 provides remote security document marking and hence comprises an interface 21 adapted to receive, from equipment in the field 1 and via a network 110, image data 111 of a scanned security document. In this way, the interface 21 can receive graphical data from any type of scanner and data source in the field 1. The graphical data generally is of a scanned image of the security document in the sense that the security document is scanned so as to generate a digital image in the form of said graphical data. Therefore, said graphical data may determine color or brightness values of the pixels from which the image can be compiled.

The system 20 does not rely on or even require specialized and proprietary data formats but, rather, is able to accept and process graphical image data received via any type of network, such as the Internet, intranet, mobile devices and other means of networking such as satellites. As a consequence, any suitable scanning equipment can be employed for scanning a security document and generating the respective image data. Said scanning equipment may thus include scanners 12 of dedicated field equipment 10 already existing and employed by the corresponding body/authority. For example, the field equipment 10 can be third-party equipment provided to the body/authority in connection with a specialized central repository as discussed and explained in greater detail in conjunction with figure 1. Likewise, the scanning equipment can also include individual or stand-alone components that are not part of or dependent on any specific field equipment 10, such as the scanner 12'. Furthermore, any other data source is envisaged so as to generate and forward the image or digital data of a scanned security document via the network 110 to the system's interface 21. The system 20 further comprises a data storage 22 adapted to store a data record comprising the received image data and additional data in relation to an owner of the scanned security document.

The embodiments of the present invention consider graphical data processing so as to superimpose image of a mark onto the image of the security document. In line with the present embodiment, the system 20 comprises a graphical data processing module 23 that retrieves the graphical data of the scanned image of the security document from the data storage 22. The graphical processing module 23 is adapted to superimpose an image 49 of a mark onto the image of the security document. Further, the graphical data processing module 23 is adapted to generate so-called further graphical data of the scanned image of the security document with the mark. This further graphical data may be stored back the data storage 22 or to another, dedicated data storage. In other words, a virtual marking of the security document is obtained. The system 20 further comprises an access module 24 adapted to provide access to the further graphical data which may be stored in the data storage 22 or in another, dedicated data storage. By means of the access module 24 officers or other authorized personnel may request inspection 112 of the virtual security document.

Generally, the embodiments of the present invention allow for an application of a mark to a security document with a well-defined and controlled quality following likewise well-defined rules and requirements. Specifically, the mark can be superimposed to image of the security document at a suitable position employing suitable colors and or contrast variations. As a consequence, the further graphical data provides an image of a security document with a marking that is applied to the correct position at a well-defined given quality, which, in turn, may solve the mentioned problems in connection with poor reproduction quality, poor legibility, effective use of the space available, effective use of inspection time, and the like.

The above embodiment of the present invention may further provide the advantage that the equipment used in the field 1 can be more independent from any centralized entity that is responsible generally for analyzing data concerned with security documents. The system 20 according to this embodiment may integrate in any existing field equipment so that the basic functionalities, such as scanning, printing, displaying information, and mechanical operation such as opening a gate, and the like, can be employed for working together with the system 20. In particular, the use of the image data of the scanned security document allows for the use of virtually any suitable scanning equipment in the field and the use of conventional communication network infrastructure.

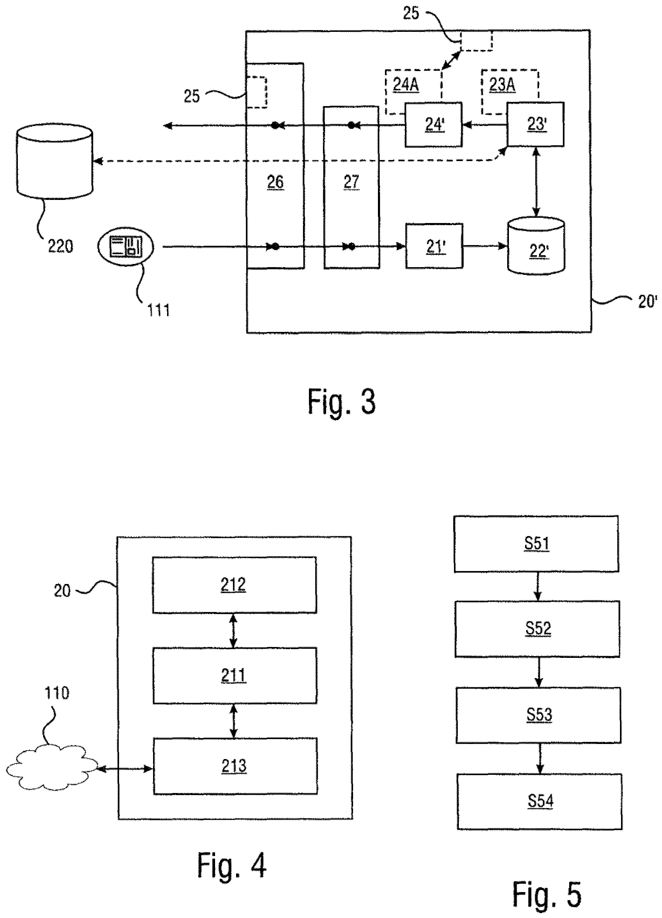

Figure 3 shows a schematic view of a server entity for remote security document marking according to a further embodiment of the present invention. In this embodiment, the system functionalities are integrated in a server entity, i.e. in the form of an application running on some kind of processing resources (server, dedicated hardware, share of a datacenter). Similar to the system as described in conjunction with Figure 2, the server entity 20' comprises an interface 21 adapted to receive, from field equipment 10 and via a network 110, image data 111 of a scanned security document. The server entity 20' further comprises a data storage 22 adapted to store a data record comprising said received image data and additional data in relation to an owner of the scanned security document. Further, the server entity 20' comprises a graphical data processing module 23' adapted to superimpose an image of a mark onto the image of the security document. The graphical data processing module 23' is further adapted to generate further graphical data of the scanned image of the security document with the mark. This further graphical data may be stored back to the data storage 22' or to another external data storage. Yet further, the server entity 20' comprises an access module 24' adapted to provide access to the further graphical data.

In this embodiment, the interface 21' is implemented as an application server that may provide privately owned cloud-based operational control of a reader, scanner, printer and/or integrated reader/scanner/printer, whichever may be installed in the field. The application server 21' may provide other administrative functions, thereby relieving the burden of integrating any scanner/reader/printer into existing third-party electronic systems. The data storage 22' can be implemented as a data collection module that is adapted to collect and store in a database all desired data. The type of data that can be stored may be limited or restricted by national legislation (e.g. privacy laws). However the stored data can be in form of data records that can be associated with each use or selected uses of a security document or value item (passport).

A data record may include any of the following: (i) image data of scan of the security document by the a reader/scanner or integrated device, including multiple scans at multiple wavelengths of electromagnetic radiation, ultrasound scans (e.g. of liquids as part of the security document or value items), x-ray scans, laser scans, etc.; (ii) security document identification such as a passport number, image(s) or other identification of the passport and its contents, including position within a given passport of any prior official (e.g. visa) stamps in that given passport; (iii) biometric and/or biographic data of the document's or item's holder or owner, such as fingerprints, eye scans, facial scans, body scans, infrared heat sensor data, audiovisual recordings, etc.; (iv) date, time and location of each use or selected uses of the document/item, including for example whenever a passport is scanned at a passport scanning facility such as a border crossing (checkpoint), transportation hub such as at airports, ship docks and train stations, or at banks, hotels, etc., or whenever a value item is scanned at a scanning facility; (v) sound, image or video recordings of interactions between document/item holders and officials (personnel) at a passport scanning facility or other recordings related to use of the document/item, associated media metadata (e.g. number of frames recorded, frequency signatures of voice or other recorded data) and metrics calculated from such media metadata (e.g. which can be encrypted and employed to complement existing anti-tampering technologies); (vi) video data showing persons using the passport or other value item; (vii) travel information associated with the value item holder or owner, e.g. arrival and/or destination information, such as an airline flight no. associated with a passport being scanned at an airport or other passport scanning facility; (viii) medical information (e.g. health status, prior exposure to communicable diseases, medical reports, etc., associated with a passport holder, individual (e.g. refugee) present at an official data collection facility, or value item owner; (ix) related documentation, such as a scan of customs forms, scans of secondary identification documents, notes by officials involved, etc. (x) identity of the responsible officer involved with handling a passport or other value item, such as where the officer is identified by fingerprint using the corresponding equipment, if installed, or other biometric for example; and (xi) RFID contents where a RFID chip is installed in a passport, label or sticker (e.g. affixed to an object) or value item and scanned at the (passport) scanning facility. The database may also store information related to visa, national entry, national exit, custom form, passport stamps or other official stamps for use in centrally (i.e. remotely) controlling a scanner, reader, printer and/or integrated device, whichever may be installed.

The server 20' may optionally comprise an analytics module 23A adapted to analyze the data records stored in the data storage 22 and to generate a corresponding analysis result. For example, the received image data 111 is analyzed for identity or security features, as such features are common elements of modern security documents. Specifically, the analytics module 23A may look at such identity or security items in connection with the additional data that is stored with the corresponding data record. For example, the identity item may lead to identification of a specific individual who is holder of a visa. The additional data may then, following this example, indicate a permissible region or period where and when the individual may reside. If an inconsistency is found by the analytics module 23, a corresponding flag can be launched toward access module 24'. In turn, the access module 24' may generate and launch a notification based on the analysis result taken in the analytics module 23A. By means of the notification, an officer in the field 1 can be notified of the analysis result remotely taken in the server entity 20' .

The analytics module 23A may be specifically configured to analyze the data stored in the database to determine, in real-time, potentially irregular use of a passport or other value item, such as where an entry into or exit from a country is being attempted by a passport holder without a corresponding preceding exit or entry, or where a value item holder is exhibiting notable behavioral patterns such as nervousness. In general, such analysis may be referred to as plausibility checks and/or checking any incoming information that is associated to an event (e.g. attempted border crossing) with the conformity to one or more predetermined rules. For example, a rule may define that a given individual needs to have entered a country, and to have been accordingly registered, before an attempt to leave the country is observed. In one embodiment, the analytics module 23A is adapted to make a determination whether or not a mark is superimposed by the graphical processing module 23'. Further, the analytics module 23A may be adapted to make a determination of a location within the security document the mark image is superimposed.

Furthermore, the analytics module 23A may also monitor external databases 220, e.g. of INTERPOL, Europol, national criminal record databases, and other databases to identify individuals of interest who are attempting to use a passport at a passport scanning facility or other value item at a scanning facility. The analytics module 23' may further monitor length-of-stay restrictions to issue an alert if a passport holder has an "overstay" (e.g. has not exited a country by the expiry date of their visa) or has an "understay" (e.g. has not stayed a sufficient amount of time in a country to qualify for a specifiable immigration status).

Besides the access module 24' an alert module 24A can be implemented as a dedicated alert module that is arranged to alert the responsible officer or other official when the document/item (e.g. passport or other value item) scanned by the officer has been flagged by the analytics module 23A as being associated with irregular use or otherwise problematic. Alerts can also be generated when tampering or other physical damage to the server entity 20' or a module thereof is detected. For this purpose a sensor 25 may be provided (e.g. temperature, pressure, vibration, location, etc.) that is configured to detect tampering. Alerts, or, more generally, notification may be provided via a secure communications module (described below), and/or by email, text and/or voice message (e.g. to a mobile telephone), etc. to the responsible officer or other official. Alerts may be provided to any official agency worldwide, as permitted by law, for the purposes of proactive security.

A firewall module 26 may be provided that is adapted to protect the server entity 20' from external, Internet-based attacks. The firewall module may also comprise the above mentioned sensors 25 that are suitable to monitor for physical tampering, intrusion or other damage to the special-purpose hardware components. In this way, it may be referred to the module 26 as a firewall and anti-tamper module.

A secure communications module 27 may be provided for encryption of communications between the server entity 20' and electronic systems of participating national governments, agencies thereof, commercial enterprises, or other customers, i.e. the field equipment, using encryption techniques consistent with customer preferences and legal requirements. The secure communications module 27 may thus facilitate communications between the server entity 20' and the client computers, including scanners, readers, printers and/or integrated devices, at, for example, passport scanning facilities. The secure communications module 27 may be operable to communicate with client computers within each country via a country-specific VPN (Virtual Private Network). In some embodiments, a separate VPN for each (passport) scanning facility can be employed. Country-specific communications facilitate the transfer of information between countries (within the limits of both countries' laws) via the server entity, despite incompatibility between respective passport-related electronic systems of different countries.

More generally, the secure communications module 27 may be adapted to facilitate the transfer of information between subscribing customers despite incompatibilities between their respective systems by receiving data from a first subscribing customer in accordance with a first communication protocol and then transmitting data from the server entity to a second subscribing customer in accordance with a second communication protocol wherein the first and second communication protocols are not necessarily compatible with each other. Any number of modules of the server entity 20' may be integrated into a customized "black-box unit", and any given module may be commercialized as a stand-alone unit suitable for integrating with existing third-party electronic systems.

Figure 4 shows a schematic view of a general apparatus embodiment of a server entity for security document analysis. In general, the server entity 20 can be any entity that provides processing resources 211 (e.g. processing unit, processing unit collection, CPU, share of a data/processing center, etc.), memory resources 212 (memory device, database, share of a data center), and communication means 213. By means of the latter, the entity 20 can communicate with the communication network 110. The memory resources 212 may store code that instructs the processing resources 211 during operation to implement any embodiment of the present invention. Specifically, the memory resources 212 may store code that instruct the processing resources 211 during operation to implement an interface for receiving via the network 110, image data of a scanned security document. Further, a data storage may be implemented so as to be adapted to store the data record comprising the received image data and additional data in relation to an owner of the scanned security document.

According to the present embodiment, the memory resources 212 store code that instruct the processing resources 211 during operation to implement a graphical data processing module adapted to superimpose an image of a mark onto the image of the security document and adapted to generate further graphical data of the scanned image of the security document with the mark, and an access module adapted to provide access to said further graphical data.

Figure 5 shows a flowchart of a general method of operation embodiment of the present invention. This method embodiment is described in the context of an exemplary scenario relating to passport control and authentication. This scenario considers a first step S51 (SCANNING SECURITY DOCUMENT) of scanning a security document (or value item) in order to generate respective image data. Therefore, even in countries where no particular scanner/reader/printer is in use, passports are nevertheless scanned by corresponding field equipment at entries and/or exits into and from the country using that country's existing passport scanning facilities (equipment) . The system then can communicate, such as via a country-specific VPN and by secure encrypted communications, with the existing passport scanning facilities to collect and store information associated with each use of a passport. More specifically, in a step S52 (RECEIVING IMAGE DATA) the server or system for remote security document marking receives the image data over a network.

In a step S53 (SUPERIMPOSE MARK), the system performs graphical data processing for superimposing an image of a mark onto the image of the security document and adapted to generate further graphical data of the scanned image of the security document with the mark In a step S54 (PROVIDE ACCESS), access to the generated further graphical data is provided.

A method embodiment may further include a step of analyzing the received image data so as to make a determination whether or not, and possibly where, a mark is to be superimposed onto the image of the scanned security document. Specifically, the already mentioned mechanisms (plausibility, rule conformity, and the like) may be employed to find any possible irregularities. If no irregularities are found or the presented security document (e.g. passport) use is otherwise not objectionable, a mark as "virtual" (i.e. digitally stored) official stamp can be generated, which may be an entry and/or exit stamp for example, that is stored in the database module such that it is accessible to the responsible officer and subsequently to officials at other passport scanning facilities within the limits permitted by the laws of each pair of countries (i.e. the country where the data was collected and the country where it is being accessed). In some embodiments, the system may inform in real-time the responsible officer or other official who has scanned a passport where prior official (e.g. visa) stamps are located in the passport. For example, when a passport holder is exiting a country, embodiments of the present invention can inform the responsible officer the page number upon which the corresponding preceding entry stamp is located.

Although detailed embodiments have been described, these only serve to provide a better understanding of the invention defined by the independent claims, and are not to be seen as limiting.

## Claims

1. A system (29) for remotely marking a security document, such as a passport (40), with a corresponding virtual stamp, label or visa, comprising:
- an interface (21) adapted to receive, from field equipment and via a network, graphical data of a scanned image of a security document;
- a data storage (22) adapted to store a data record comprising said received image data and additional data in relation to an owner of the scanned security document;
- a graphical data processing module (23) adapted to superimpose an image of a mark onto the image of the security document and adapted to generate further graphical data of the scanned image of the security document with the mark;
- an access module (24) adapted to provide access to said further graphical data.

2. The system according to claim 1, further comprising an analytics module adapted to analyze the received graphical data and to generate an analysis result.

3. The system according to claim 2, wherein the analytics module is further adapted to make a determination whether or not the graphical data processing module is to superimpose the mark.

4. The system according to claim 2 or 3, wherein the analytics module is further adapted to make a determination where the mark is superimposed by the graphical data processing module.

5. The system according to any one of claims 1 to 4, further comprising a sensor adapted to sense tampering with the system.

6. The system according to claim 5, wherein said sensor is any one of a temperature sensor, a pressure sensor, a vibration sensor, and/or a location sensor.

7. The system according to any one of claims 1 to 6, further comprising a firewall module adapted to protect the system from network attacks and/or physical attacks to the system's hardware.

8. The system according to any one of claims 1 to 7, further comprising a secure communication module adapted to provide secure communication of said image data and/or a notification.

9. The system according to any one of claims 1 to 8, being adapted to communicate with an external database.

10. The system according to any one of claims 1 to 9, wherein the system is remote from the equipment that performs scanning of the security document for generating said image data.

11. The system according to claim 10, wherein access to said further graphical data is provided toward a location where the scanning of the security document was performed.

12. A method for remotely marking a security document, such as a passport (40), with a corresponding virtual stamp, label or visa, comprising:
- a step (S52) of receiving, from field equipment and via a network, graphical data of a scanned image of a security document;
- a step of storing a data record comprising said received image data and additional data in relation to an owner of the scanned security document;
- a step (S53) of superimposing an image of a mark onto the image of the security document and of generating further graphical data of the scanned image of the security document with the mark;
- a step (S54) of providing access to said further graphical data.

13. The method according to claim 12, further comprising a step of scanning said security document by field equipment and generating image data of the scanned security document and a step of transmitting the image data via a network to a system for remote analysis of a security document.

## Patentansprüche

1. Ein System (29) zur Fernmarkierung eines Sicherheitsdokuments, wie eines Passes (40), mit einem entsprechenden virtuellen Stempel, Etikett oder Visum, umfassend:
- eine Schnittstelle (21), die daran angepasst ist, von einer Feldgerätschaft und über ein Netzwerk grafische Daten eines gescannten Bildes eines Sicherheitsdokuments zu empfangen;
- einen Datenspeicher (22), der daran angepasst ist, einen Datensatz zu speichern, der die empfangenen Bilddaten und zusätzliche Daten in Bezug auf einen Eigentümer des gescannten Sicherheitsdokuments umfasst;
- ein grafisches Datenverarbeitungsmodul (23), das daran angepasst ist, ein Bild einer Markierung auf das Bild des Sicherheitsdokuments zu überlagern, und daran angepasst ist, weitere grafische Daten des gescannten Bildes des Sicherheitsdokuments mit der Markierung zu erzeugen;
- ein Zugriffsmodul (24), das daran angepasst ist, den Zugriff auf die weiteren grafischen Daten bereitzustellen.

2. Das System nach Anspruch 1, ferner umfassend ein Analytikmodul, das daran angepasst ist, die empfangenen grafischen Daten zu analysieren und ein Analyseergebnis zu erzeugen.

3. Das System nach Anspruch 2, wobei das Analytikmodul ferner daran angepasst ist, zu bestimmen, ob das grafische Datenverarbeitungsmodul die Markierung überlagern soll oder nicht.

4. Das System nach Anspruch 2 oder 3, wobei das Analytikmodul ferner daran angepasst ist, zu bestimmen, wo die Markierung von dem grafischen Datenverarbeitungsmodul überlagert wird.

5. Das System nach einem der Ansprüche 1 bis 4, ferner umfassend einen Sensor, der daran angepasst ist, unbefugte Manipulationen mit dem System zu erfassen.

6. Das System nach Anspruch 5, wobei der Sensor einer von einem Temperatursensor, einem Drucksensor, einem Vibrationssensor und/oder einem Positionssensor ist.

7. Das System nach einem der Ansprüche 1 bis 6, ferner umfassend ein Firewall-Modul, das daran angepasst ist, das System vor Netzwerkangriffen und/oder physischen Angriffen auf die Hardware des Systems zu schützen.

8. Das System nach einem der Ansprüche 1 bis 7, ferner umfassend ein sicheres Kommunikationsmodul, das daran angepasst ist, eine sichere Übertragung der Bilddaten und/oder einer Benachrichtigung zu ermöglichen.

9. Das System nach einem der Ansprüche 1 bis 8, das daran angepasst mit einer externen Datenbank zu kommunizieren.

10. Das System nach einem der Ansprüche 1 bis 9, wobei das System von der Gerätschaft entfernt ist, die das Scannen des Sicherheitsdokuments zum Erzeugen der Bilddaten durchführt.

11. Das System nach Anspruch 10, wobei der Zugriff auf die weiteren grafischen Daten in Richtung einer Stelle bereitgestellt wird, an der das Scannen des Sicherheitsdokuments durchgeführt wurde.

12. Ein Verfahren zur Fernmarkierung eines Sicherheitsdokuments, wie eines Passes (40), mit einem entsprechenden virtuellen Stempel, Etikett oder Visum, umfassend:
- einen Schritt (S52) des Empfangens von grafischen Daten eines gescannten Bildes eines Sicherheitsdokuments von einer Feldgerätschaft und über ein Netzwerk;
- einen Schritt des Speicherns eines Datensatzes, der die empfangenen Bilddaten und zusätzliche Daten in Bezug auf einen Eigentümer des gescannten Sicherheitsdokuments umfasst;
- einen Schritt (S53) des Überlagerns eines Bildes einer Markierung auf das Bild des Sicherheitsdokuments und des Erzeugens weiterer grafischer Daten des gescannten Bildes des Sicherheitsdokuments mit der Markierung;
- einen Schritt (S54) des Bereitstellens des Zugriffs auf die weiteren grafischen Daten.

13. Das Verfahren nach Anspruch 12, ferner umfassend einen Schritt des Scannens des Sicherheitsdokuments durch eine Feldgerätschaft und des Erzeugens von Bilddaten des gescannten Sicherheitsdokuments und einen Schritt des Übertragens der Bilddaten über ein Netzwerk an ein System zur Fernanalyse eines Sicherheitsdokuments.

## Revendications

1. Système (29) de marquage à distance d'un document de sécurité, tel qu'un passeport (40), avec un timbre, une étiquette ou un visa virtuel correspondant, comprenant :
- une interface (21) adaptée pour recevoir, en provenance d'un équipement de terrain et via un réseau, des données graphiques d'une image balayée d'un document de sécurité ;
- un stockage de données (22) adapté pour stocker un enregistrement de données comprenant lesdites données d'image reçues et des données supplémentaires en lien avec un propriétaire du document de sécurité balayé ;
- un module de traitement de données graphiques (23) adapté pour superposer une image d'une marque sur l'image du document de sécurité et adapté pour générer des données graphiques supplémentaires de l'image balayée du document de sécurité avec la marque ;
- un module d'accès (24) adapté pour fournir un accès auxdites données graphiques supplémentaires.

2. Système selon la revendication 1, comprenant en outre un module analytique adapté pour analyser les données graphiques reçues et pour générer un résultat d'analyse.

3. Système selon la revendication 2, dans lequel le module analytique est en outre adapté pour établir une détermination indiquant si le module de traitement de données graphiques doit superposer ou non la marque.

4. Système selon la revendication 2 ou 3, dans lequel le module analytique est en outre adapté pour réaliser une détermination indiquant où la marque est superposée par le module de traitement de données graphiques.

5. Système selon l'une quelconque des revendications 1 à 4, comprenant en outre un capteur adapté pour détecter une effraction avec le système.

6. Système selon la revendication 5, dans lequel ledit capteur est l'un quelconque d'un capteur de température, d'un capteur de pression, d'un capteur de vibration et/ou d'un capteur d'emplacement.

7. Système selon l'une quelconque des revendications 1 à 6, comprenant en outre un module pare-feu adapté pour protéger le système d'attaques réseau et/ou d'attaques physiques sur le matériel du système.

8. Système selon l'une quelconque des revendications 1 à 7, comprenant en outre un module de communication sécurisée adapté pour fournir une communication sécurisée desdites données d'image et/ou d'une notification.

9. Système selon l'une quelconque des revendications 1 à 8, adapté pour communiquer avec une base de données externe.

10. Système selon l'une quelconque des revendications 1 à 9, dans lequel le système est à distance de l'équipement qui réalise le balayage du document de sécurité pour générer lesdites données d'image.

11. Système selon la revendication 10, dans lequel un accès auxdites données graphiques supplémentaires est fourni vers un emplacement où le balayage du document de sécurité a été réalisé.

12. Procédé de marquage à distance d'un document de sécurité, tel qu'un passeport (40), avec un timbre, une étiquette ou un visa virtuel correspondant, comprenant :
- une étape (S52) de réception, en provenance d'un équipement de terrain et via un réseau, de données graphiques d'une image balayée d'un document de sécurité ;
- une étape de stockage d'un enregistrement de données comprenant lesdites données d'image reçues et des données supplémentaires en lien avec un propriétaire du document de sécurité balayé ;
- une étape (S53) de superposition d'une image d'une marque sur l'image du document de sécurité et de génération de données graphiques supplémentaires de l'image balayée du document de sécurité avec la marque ;
- une étape (S54) de fourniture d'accès auxdites données graphiques supplémentaires.

13. Procédé selon la revendication 12, comprenant en outre une étape de balayage dudit document de sécurité par un équipement de terrain et de génération de données d'image du document de sécurité balayé et une étape de transmission des données d'image via un réseau à un système pour une analyse à distance d'un document de sécurité.
